(19) Europäisches Patentamt European Patent Office Office européen des brevets

(11) **EP 3 530 553 B1**

(12) **EUROPEAN PATENT SPECIFICATION**

(45) Date of publication and mention of the grant of the patent:
**23.06.2021 Bulletin 2021/25**

(21) Application number: **17861877.3**

(22) Date of filing: **13.10.2017**

(51) Int Cl.:
**B62D 13/00** (2006.01)       **B62D 7/15** (2006.01)

(86) International application number:
**PCT/CN2017/106047**

(87) International publication number:
**WO 2018/072649 (26.04.2018 Gazette 2018/17)**

(54) **FOLLOWING CONTROL METHOD FOR TRAIN TRACK, SYSTEM AND TRAIN**

NACHLÄUFERSTEUERUNGSVERFAHREN FÜR GLEISE, SYSTEM UND ZUG

PROCÉDÉ DE COMMANDE DE SUIVI POUR VOIE DE TRAIN, SYSTÈME ET TRAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2016 CN 201610913144**
**10.10.2017 CN 201710936217**

(43) Date of publication of application:
**28.08.2019 Bulletin 2019/35**

(73) Proprietor: **CRRC Zhuzhou Electric Locomotive Research Institute Co., Ltd.**
**Zhuzhou, Hunan 412001 (CN)**

(72) Inventors:
• **FENG, Jianghua**
  **Hunan 412001 (CN)**
• **ZHANG, Chenlin**
  **Hunan 412001 (CN)**
• **XIAO, Lei**
  **Hunan 412001 (CN)**
• **LI, Jianghong**
  **Hunan 412001 (CN)**
• **LI, Xiaoguang**
  **Hunan 412001 (CN)**
• **LIU, Xiaocong**
  **Hunan 412001 (CN)**
• **YUAN, Xiwen**
  **Hunan 412001 (CN)**
• **JIANG, Xiaoqing**
  **Hunan 412001 (CN)**
• **PENG, Jing**
  **Hunan 412001 (CN)**
• **LU, Qi**
  **Hunan 412001 (CN)**

(74) Representative: **Mewburn Ellis LLP**
**Aurora Building**
**Counterslip**
**Bristol BS1 6BX (GB)**

(56) References cited:
**CN-A- 105 292 256**       **CN-A- 105 292 257**
**CN-A- 105 292 257**       **CN-A- 105 313 963**
**CN-A- 106 347 457**       **CN-B- 103 057 586**
**JP-A- H10 119 808**       **JP-U- H02 144 880**
**KR-A- 20110 051 002**

**Description**

**FIELD**

The present disclosure relates to the technical field of tram control, and in particular, to a method and a system for controlling trajectory-tracking of a tram, and a tram.

**BACKGROUND**

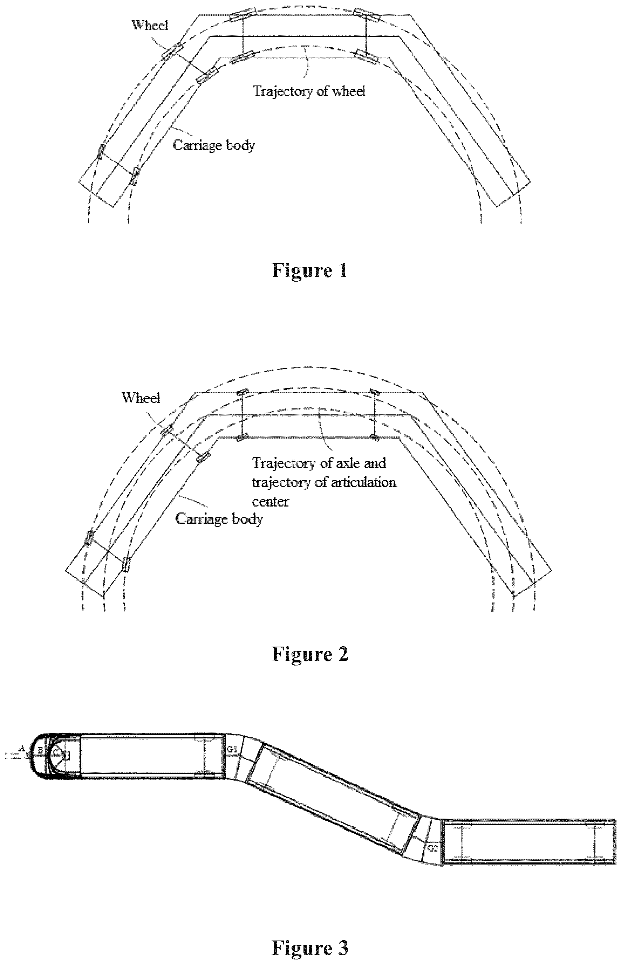

With the development of urban public transport, a demand on a capacity of the public transport is also increasing. A rubber-tyred tram formed by multiple carriages that are connected in articulation can meet a demand on large power of the urban public transport, and is a growing hot topic for development. As the tram has multiple carriages and shares traffic priority with other means of transportation, it is required to pay close attention to safety of the tram when the tram travels, especially when the tram is turning. At present, two methods for controlling trajectory-tracking have been disclosed, which are respectively based on axle control and articulation control. The method for controlling trajectory-tracking based on the axle control addresses an issue that all axles travels on a same trajectory, as shown in Figure 1. The method for controlling trajectory-tracking based on the articulation control addresses an issue of safety when the tram turns, as shown in Figure 2. In running of the tram, a tram driver cannot see a position of wheels, namely, a position of a center point of the axle, and only focuses on a local range in front of the driver. As shown in Figure 3, the driver generally focuses on a point A in front of the tram and a streamlined transition at a head of the tram, and the streamlined transition can be equivalent to a point B at a central axle of a carriage. A position of an articulation point has a trend to move outside when the tram turns, which may endanger pedestrians and other vehicles on the road. Therefore, it is important to provide a method for controlling trajectory-tracking based on a driving habit of the driver. Document CN-A-105292257, which is seen as the closest prior art, shows a method and a system for controlling trajectory-tracking of a tram according to the preamble of claims 1 and 7.

**SUMMARY**

A technical issue to be addressed in the present disclosure is as follows. In view of the technical problems of the conventional technology, a method and a system for controlling trajectory-tracking of a tram, and a tram are provided according to the present disclosure. It is ensured that an articulation point of a tram and a focusing point of a driver travels on a same trajectory, each wheel travels on a same trajectory, the tram trajectory is well controlled when the tram turns, and it is effectively prevented that pedestrians and other vehicles are endangered due to turning of the tram.

In order to address the above technical issue, a method for controlling trajectory-tracking of a tram is provided according to the present disclosure, including:

step S1, acquiring a measurement of a steering angle of a front axle of the first carriage of the tram and a measurement of a steering angle of a rear axle of the first carriage of the tram;

step S2, calculating, for the first carriage, a first angle for the first carriage, based on the measurement of the steering angle of the front axle of the first carriage and the measurement of the steering angle of the rear axle of the first carriage; and calculating an input for the steering angle of the rear axle of the first carriage, based on the first angle and the measurement of the steering angle of the front axle of the first carriage; where the first angle is an angle between an axis of the current carriage and a movement direction of an articulation point connecting the current carriage and a following carriage;

step S3, controlling to steer the rear axle of the first carriage, based on the input for the steering angle of a rear axle of the first carriage;

step S4, acquiring, for a next carriage, an articulation angle of an articulation point connecting the current carriage and a previous carriage;

step S5, calculating a second angle and a first angle for the current carriage, based on the articulation angle and a first angle for the previous carriage; and calculating an input for a steering angle of a rear axle of the current carriage and an input for a steering angle of a front axle of the current carriage, based on the second angle and the first angle for the current carriage; where the second angle is an angle between the axis of the current carriage and a movement direction of the articulation point connecting the current carriage and the previous carriage;

step S6, controlling to steer the rear axle of the current carriage, based on the input for the steering angle of the rear axle of the current carriage; and controlling to steer the front axle of the current carriage, based on the input for the steering angle of the front axle of the current carriage; and

step S7, repeating steps S4 to S6 until the rear axle and the front axle are controlled to be steered for each carriage.

As an improvement of the present disclosure, in the step S1, the measurement of the steering angle of the front axle of the first carriage is a steering value from a steering instruction for the front axle of the first carriage, and the measurement of the steering angle of the rear axle of the first carriage is acquired through an angle sensor.

As an improvement of the present disclosure, the step S2 specifically includes:

step S2.1, constructing a virtual point in front of the front axle of the first carriage, where the virtual point is located on a central axis of the tram;
step S2.2, calculating a steering angle of the virtual point based on formula (1):

$$delta_{V1g0} = \arctan\left( \frac{L_1 + L_{1g}}{L_1} \times \tan\left(delta_{1m}\right) - \frac{L_{1g}}{L_1} \tan\left(delta_{2m}\right) \right) \dots\dots\dots\dots\dots \ (1)$$

in formula (1), $delta_{V1g0}$ represents the steering angle of the virtual point, $L_1$ represents a pre-acquired wheelbase between the front axle and the rear axle of the first carriage, $L_{1g}$ represents a pre-acquired distance between the virtual point and the front axle of the first carriage, $delta_{1m}$ represents the measurement of the steering angle of the front axle of the first carriage, and $delta_{2m}$ represents the measurement of the steering angle of the rear axle of the first carriage;
step S2.3, determining the first angle based on the steering angle of the virtual point, as shown in formula (2):

$$delta_{V1g1} = -delta_{V1g0} \dots\dots\dots\dots\dots\dots.(2)$$

in formula (2), $delta_{V1g0}$ represents the steering angle of the virtual point, and $delta_{V1g1}$ represents the first angle;
step S2.4, calculating the input for the steering angle of the rear axle of the first carriage based on the first angle and the measurement of the steering angle of the front axle of the first carriage, as shown in formula (3):

$$delta_{2r} = \arctan\left( \frac{L_1 \times \tan\left(delta_{V1g1}\right) + L_{g1} \times \tan\left(delta_1\right)}{L_1 + L_{g1}} \right) \dots\dots\dots\dots\dots..(3)$$

in formula (3), $delta_{2r}$ represents the input for the steering angle of the rear axle of the first carriage, $L_1$ represents the pre-acquired wheelbase between the front axle and the rear axle of the first carriage, $L_{g1}$ represents a pre-acquired distance between the rear axle of the first carriage and an articulation point connecting the first carriage and the second carriage, $delta_{V1g1}$ represents the first angle, and $delta_1$ represents the measurement of the steering angle of the front axle of the first carriage.

As an improvement of the present disclosure, after the step S2.3, the method further includes: step S2.3.1, performing, on the first angle, a delay with inertia link of one or more orders.
As an improvement of the present disclosure, the step S5 specifically includes:

step S5.1, calculating the second angle based on formula (4):

$$delta_{V2g1} = delta_{V1g1} - beta_1 \dots\dots\dots\dots\dots \ (4)$$

in formula (4), $delta_{V2g1}$ represents the second angle for the current carriage, $beta_1$ represents the articulation angle, and $delta_{V1g1}$ represents the first angle for the previous carriage.
step S5.2, determining the first angle for the current carriage based on the second angle for the current carriage, as shown in a formula (5):

$$delta_{V2g2} = -delta_{V2g1} \quad \dots\dots\dots\dots\dots\dots \quad (5)$$

in formula (5), $delta_{V2g2}$ represents the first angle for the current carriage, and $delta_{V2g1}$ represents the second angle for the current carriage;

step S5.3, calculating the input for the steering angle of the rear axle of the current carriage based on the second angle and the first angle for the current carriage, as shown in formula (6):

$$delta_{4r} = \arctan\left( \frac{L_{g2} \times \tan\left(delta_{V2g1}\right) + \left(L_2 + L_{2g}\right) \times \tan\left(delta_{V2g2}\right)}{L_{g2} + L_2 + L_{2g}} \right) \quad \dots\dots\dots \quad (6)$$

in formula (6), $delta_{4r}$ represents the input for the steering angle of the rear axle of the current carriage, $L_{g2}$ represents a pre-acquired distance between the rear axle of the current carriage and an articulation point connecting the current carriage and the following carriage, $L_{2g}$ represents a pre-acquired distance between the front axle of the current carriage and the articulation point connecting the current carriage and the previous carriage, $L_2$ represents a pre-acquired distance between the front axle and the rear axle of the current carriage, $delta_{V2g2}$ represents the first angle for the current carriage, and $delta_{V2g1}$ represents the second angle; and

step S5.4, calculating the input for the steering angle of the front axle of the current carriage based on formula (7):

$$delta_{3r} = \arctan\left( \frac{L_{2g} \times \tan\left(delta_{4r}\right) + L_2 \times \tan\left(delta_{V2g1}\right)}{L_2 + L_{2g}} \right) \quad \dots\dots\dots\dots \quad (7)$$

in formula (7), $delta_{3r}$ represents the input for the steering angle of the front axle of the current carriage, $delta_{4r}$ represents the input for the steering angle of the rear axle of the current carriage, $L_{2g}$ represents the pre-acquired distance between the front axle of the current carriage and the articulation point connecting the current carriage and the previous carriage and, $L_2$ represents the pre-acquired distance between the front axle and the rear axle of the current carriage, and $delta_{V2g1}$ represents the second angle.

As an improvement of the present disclosure, after the step S5.2, the method further includes: step S5.2.1, performing, on the first angle for the current carriage, the delay with inertia link of one or more orders.

A system for controlling trajectory-tracking is provided, including a parameter acquisition module, a calculation module, and a control module, where:

the parameter acquisition module is configured to acquire a measurement of a steering angle of a front axle of the first carriage of a tram, a measurement of a steering angle of a rear axle of the first carriage of the tram, and an articulation angle of an articulation point connecting a current carriage and a previous carriage;

the calculation module is configured to: calculate a first angle for the first carriage, based on the measurement of the steering angle of the front axle of the first carriage and the measurement of the steering angle of the rear axle of the first carriage, and calculate an input for the steering angle of the rear axle of the first carriage, based on the first angle and the measurement of the steering angle of the front axle of the first carriage; calculate a second angle and a first angle for the current carriage, based on the articulation angle and a first angle for the previous carriage, and calculate an input for a steering angle of a rear axle of the current carriage and an input for a steering angle of a front axle of the current carriage, based on the second angle and the first angle for the current carriage; where the first angle is an angle between an axis of the current carriage and a movement direction of an articulation point connecting the current carriage and a following carriage, and the second angle is an angle between the axis of the current carriage and a movement direction of the articulation point connecting the current carriage and the previous carriage; and

the control module is configured to: control to steer the rear axle of the first carriage, based on the input for the steering angle of the rear axle of the first carriage; control to steer the rear axle of the current carriage, based on the input for the steering angle of the rear axle of the current carriage; and control to steer the front axle of the current carriage, based on the input for the steering angle of the front axle of the current carriage.

As a further improvement of the present disclosure, the calculation module is further configured to perform, on the first angle, a delay with inertia link of one or more orders.

A tram is provided, including the aforementioned system for controlling trajectory-tracking of the tram.

As an improvement of the present disclosure, a wheelbase of each carriage is same, a distance between a connection point of an articulation structure of each carriage and an axle nearest to the connection point is same. Compared with conventional technology, the present disclosure has following advantages.

First, in the present disclosure, it is ensured that articulation points of the tram and the focusing position of a driver travel on the same trajectory, all the wheels travel on the same trajectory, the tram trajectory is well controlled when the tram turns, and it is effectively prevented that pedestrians and other vehicles are endangered due to turning of the tram.

Second, the algorithm of the present disclosure is succinct and feasible for implementation without additional equipment, and the implementation has a low cost.

## BRIEF DESCRIPTION OF THE DRAWINGS

Figure 1 is a schematic diagram of a tram trajectory based on axle control according to the conventional technology;

Figure 2 is a schematic diagram of a tram trajectory based on articulation control according to the conventional technology;

Figure 3 is a schematic diagram of a position on which a driver focuses in running of a tram;

Figure 4 is a schematic diagram of a relationship between an inner wheel and an outer wheel of a tram according to a specific embodiment of the present disclosure;

Figure 5 is a schematic diagram of a bicycle-model according to a specific embodiment of the present disclosure;

Figure 6 is a schematic diagram for calculating an input for a steering angle of a rear axle of the first carriage according to a specific embodiment of the present disclosure;

Figure 7 is a schematic diagram for calculating an input for a steering angle of a rear axle of a current carriage according to a specific embodiment of the present disclosure;

Figure 8 is a schematic diagram for calculating an input for a steering angle of a front axle of a current carriage according to a specific embodiment of the present disclosure;

Figure 9 is a schematic structural diagram according to a specific embodiment of the present disclosure;

Figure 10 is a schematic diagram of a tram according to a specific embodiment of the present disclosure;

Figure 11 is a schematic flowchart according to a specific embodiment of the present disclosure; and

Figure 12 is a schematic diagram of a tram trajectory controlled according to a specific embodiment of the present disclosure.

## DETAILED DESCRIPTION OF EMBODIMENTS

The present disclosure is further described in conjunction with drawings of a specification and specific preferable embodiments, by which a protection scope of the present disclosure is not limited.

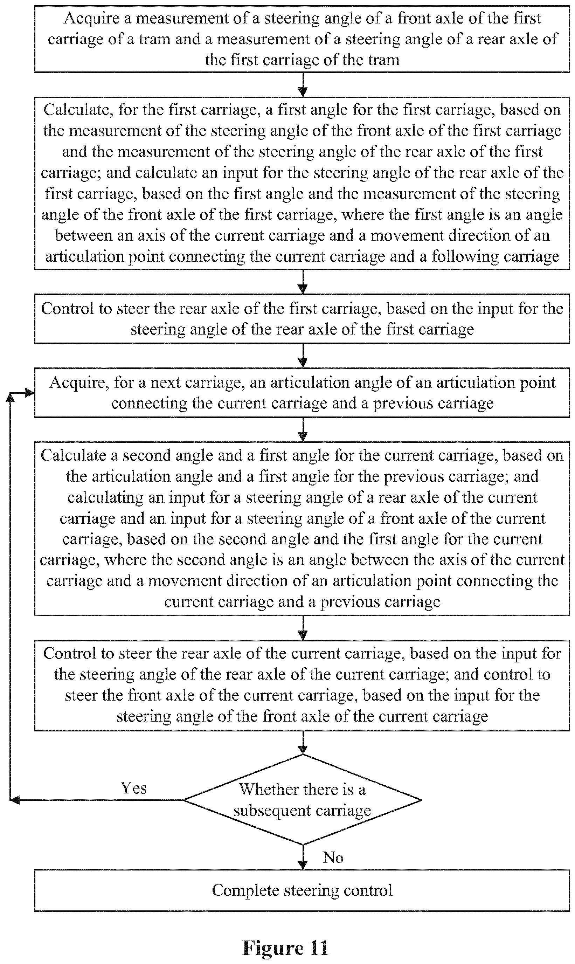

As shown in Figure 11, a method for controlling trajectory-tracking of a tram according to an embodiment includes steps S1 to S7. In step S1, a measurement of a steering angle of a front axle of the first carriage of a tram and a measurement of a steering angle of a rear axle of the first carriage of the tram are acquired. In step S2, for the first carriage, a first angle for the first carriage is calculated based on the measurement of the steering angle of the front axle of the first carriage and the measurement of the steering angle of the rear axle of the first carriage, and an input for the steering angle of the rear axle of the first carriage is calculated based on the first angle and the measurement of the steering angle of the front axle of the first carriage. The first angle is an angle between an axis of the current carriage and a movement direction of an articulation point connecting the current carriage and a following carriage. In step S3, the rear axle of the first carriage is controlled to be steered based on the input for the steering angle of the rear axle of the first carriage. In step S4, for a next carriage, an articulation angle of an articulation point connecting the current carriage and a previous carriage is acquired. In step S5, a second angle and a first angle for the current carriage are calculated based on the articulation angle and a first angle for the previous carriage, and an input for a steering angle of a rear axle of the current carriage and an input for a steering angle of a front axle of the current carriage are calculated based on the second angle and the first angle for the current carriage. The second angle is an angle between the axis of the current carriage and a movement direction of the articulation point connecting the current carriage and the previous carriage. In step S6, the rear axle of the current carriage is controlled to be steered based on the input for the steering angle of the rear axle of the current carriage, and the front axle of the current carriage is controlled to be steered based on the input for the steering angle of the front axle of the current carriage. In step S7, the stepsS4 to S6 are repeated until the rear axle and the front axle are controlled to be steered for each carriage.

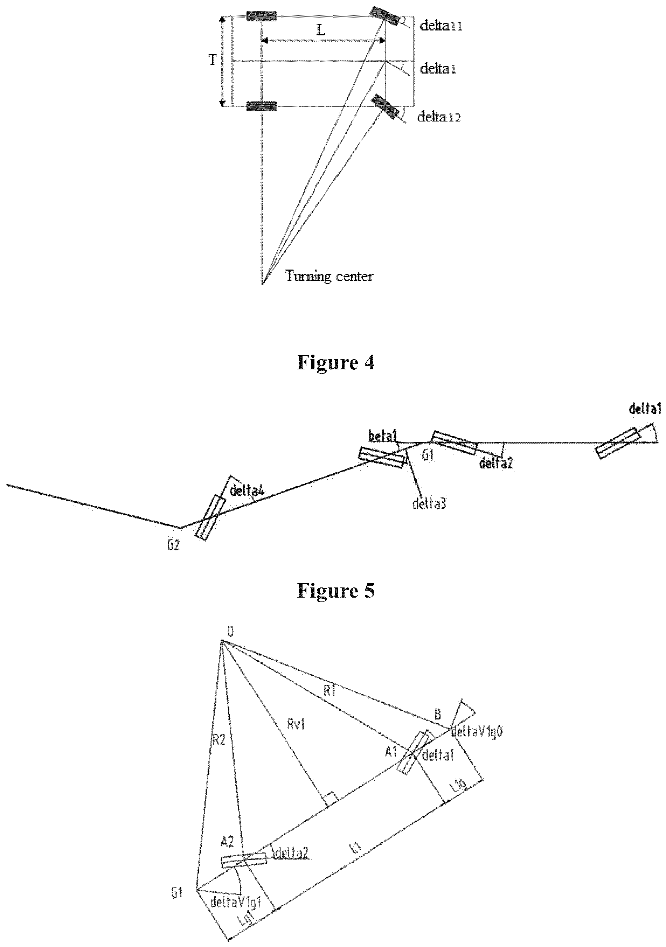

In the embodiment, for clear illustration of the technical solutions of the present disclosure, a tram static model is simplified to be a mono-wheel model (which is also called a bicycle-model, bicycle-model). A sideslip angle between a wheel of the tram and a road is negligible in the bicycle-model, that is, a direction of the tram depends on a direction of the wheel, there is no other external force on the tram, the tram runs at a low speed, and mass and inertia are negligible. A simplification process of the bicycle-model may be as shown in Figure 4. $delta_{11}$ represents a steering angle of an outer wheel of the tram, $delta_{12}$ represents a steering angle of an inner wheel of the tram, $delta_1$ represents a steering angle of a wheel of the tram in the bicycle-model, L represents a wheelbase between a front axle and a rear axle, and T represents a wheel span between the outer wheel and the inner wheel. The simplification process may be expressed through formulas (8) and (9).

$$\cot\left(delta_{11}\right) - \cot\left(delta_1\right) = \frac{T}{2L} \quad \ldots\ldots\ldots\ldots\ldots\ldots\ldots (8)$$

$$\cot\left(delta_1\right) - \cot\left(delta_{12}\right) = \frac{T}{2L} \quad \ldots\ldots\ldots\ldots\ldots\ldots\ldots (9)$$

In actual control of the tram, a steering angle inputted for a certain axle of the tram is the steering angle of the wheel of the tram in the bicycle-model. The steering angles of the inner wheel and the outer wheel on the axle may be automatically coordinated by a link mechanism on the axle.

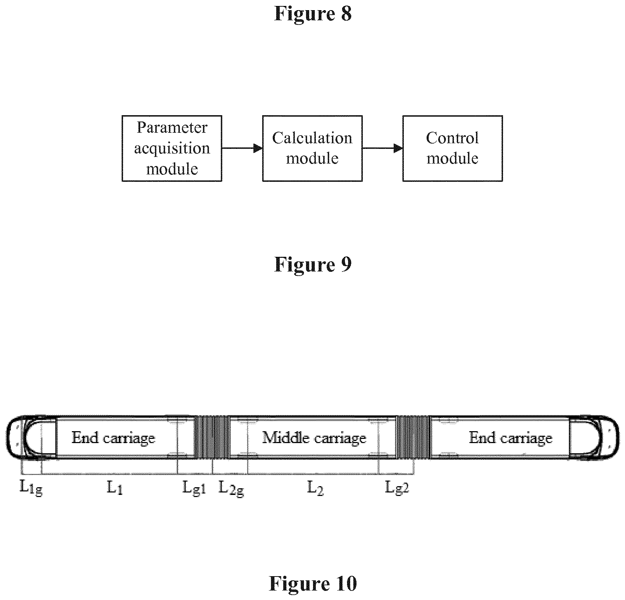

Therefore, kinematic characteristics of the tram can be described by kinematic characteristics of a "bicycle" of which wheels are located on a central axis of the tram. For a tram including three carriages, the bicycle-model of the tram is as shown in Figure 5. $delta1$ represents the steering angle of a front axle of the first carriage, $delta2$ represents the steering angle of a rear axle of the first carriage, $delta3$ represents the steering angle of a front axle of the second carriage, $delta4$ represents the steering angle of a rear axle of the second carriage, $G1$ represents an articulation point connecting the first carriage and the second carriage, $G2$ represents an articulation point connecting the second carriage and the third carriage, and $beta1$ represents an articulation angle of the articulation point connecting the first carriage and the second carriage, namely, an articulation angle of the articulation mechanism. As shown in Figure 10, the three carriages are articulated to form the tram according to the present embodiment. A distance between the front axle of the first carriage and a virtual point (a virtual point which is a orthographic projection of a driver's focusing point on the central axis, where the focusing point itself may be a virtual point, namely, may be located on the central axis or at any position in front of the front axle) is $L_{1g}$, a distance between the rear axle of the first carriage and the first articulation point $G1$ is $L_{g1}$, a distance between the front axle of the second carriage and the first articulation point $G1$ is $L_{2g}$, a distance between the rear axle of the second carriage and the second articulation point $G2$ is $L_{g2}$, a wheelbase of the first carriage is $L_1$, and a wheelbase of the second carriage is $L_2$. The tram according to the embodiment is symmetrically arranged. The tram may run in both directions, that is, a head carriage is same as a tail carriage, and middle carriages are same for a tram with more than three carriages. A front-end point of the head of the first carriage is determined as the virtual point, and hence there are $L_1 = L_2$ and $L_{1g} = L_{g1} = L_{2g} = L_{g2}$.

In the step S1 of the embodiment, the measurement of the steering angle of the front axle of the first carriage is a steering value from a steering instruction for the front axle of the first carriage. The measurement of the steering angle of the rear axle of the first carriage is acquired through an angle sensor.

In the embodiment, the step S2 specifically includes following steps S2.1 to S2.4. In step S2.1, a virtual point

6

is constructed in front of the front axle of the first carriage, where the virtual point is located on a central axis of the tram.

In step S2.2, a steering angle of the virtual point is calculated based on formula (1).

$$delta_{V1g0} = \arctan\left( \frac{L_1 + L_{1g}}{L_1} \times \tan\left(delta_{1m}\right) - \frac{L_{1g}}{L_1}\tan\left(delta_{2m}\right)\right) \quad \dots\dots\dots\dots\dots (1)$$

In formula (1), $delta_{V1g0}$ represents the steering angle of the virtual point, $L_1$ represents a pre-acquired wheelbase between the front axle and the rear axle of the first carriage, $L_{1g}$ represents a pre-acquired distance between the virtual point and the front axle of the first carriage, $delta_{1m}$ represents the measurement of the steering angle of the front axle of the first carriage, and $delta_{2m}$ represents the measurement of the steering angle of the rear axle of the first carriage.

In step S2.3, the first angle is determined based on the steering angle of the virtual point, as shown in formula (2).

$$delta_{V1g1} = -delta_{V1g0} \quad \dots\dots\dots\dots\dots\dots(2)$$

In formula (2), $delta_{V1g0}$ represents the steering angle of the virtual point, and $delta_{V1g1}$ represents the first angle.

In step S2.4, the input for the steering angle of the rear axle of the first carriage is calculated based on the first angle and the measurement of the steering angle of the front axle of the first carriage, as shown in formula (3).

$$delta_{2r} = \arctan\left( \frac{L_1 \times \tan\left(delta_{V1g1}\right) + L_{g1} \times \tan\left(delta_1\right)}{L_1 + L_{g1}}\right) \quad \dots\dots\dots\dots\dots(3)$$

In formula (3), $delta_{2r}$ represents the input for the steering angle of the rear axle of the first carriage, $L_1$ represents the pre-acquired wheelbase between the front axle and the rear axle of the first carriage, $L_{g1}$ represents a distance between the rear axle of the first carriage and an articulation point connecting the first carriage and the second carriage, $delta_{V1g1}$ represents the first angle, and $delta_1$ represents the measurement of the steering angle of the front axle of the first carriage.

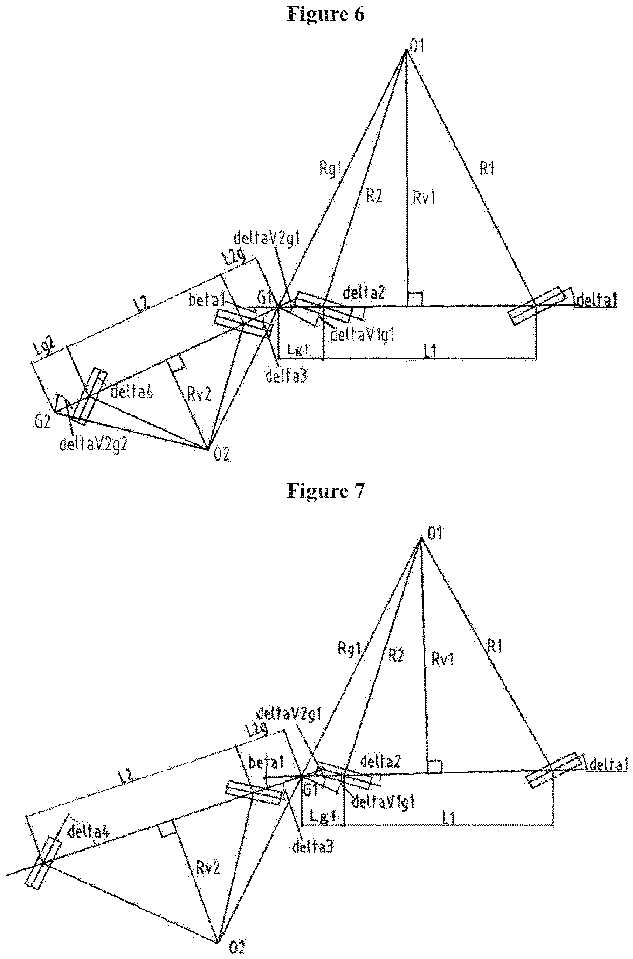

Shown in Figure 6 is a schematic diagram of steering calculation for the first carriage. B is the constructed virtual point, G1 is the articulation point connecting the first carriage and the second carriage, and O is a center of a turning circle of the first carriage. The driver gives the steering instruction to the front axle of the first carriage through a driving control system and inputs a steering angle $delta_{1r}$, and such inputted value is the measurement $delta_{1m}$ of the steering angle of the front axle of the first carriage that is acquired by measuring. An attitude of the first carriage is determined by both the measurement $delta_{1m}$ of the steering angle of the front axle of the first carriage and the measurement $delta_{2m}$ of the steering angle of the rear axle of the first carriage. Thereby, a steering angle $delta_{V1g0}$ of the virtual point B may be calculated based on the formula (1). That is, a virtual wheel is constructed at the virtual point B, and the steering angle of the virtual wheel is $delta_{V1g0}$. The angle between the axis of the current carriage and the moving direction of the articulation point connecting the current carriage and the following carriage is taken as the first angle. For the first carriage, the first angle is an angle between an axis of the first carriage and a moving direction of an articulation point connecting the first carriage and the second carriage. Namely, the virtual wheel is constructed at the articulation point, and a rotation angle of the virtual wheel relative to the central axis of the first carriage is the first angle. In order to ensure that the articulation position at G1 and the virtual point B travels on a same trajectory, the steering angle of the virtual wheel at the virtual point B is equal to the first angle in magnitude and opposite to the first angle in direction, as shown in the formula (2). Such calculation of the first angle $delta_{V1g1}$ is performed in case of steady-state circumference, and the tram does not run with a constant radius in practice. Therefore, it is required to consider a transition process between different radiuses, and perform delay with inertia link of one or more orders on the first angle, as shown in formula (10).

$$delta_{V1g1} = f\left(delta_{V1g1}\right) \quad \dots\dots\dots\dots\dots\dots\dots(10)$$

In formula (10), $f(delta_{V1g1})$ is a delay operation with inertia link.

Due to delay relationship shown in formula (10), a turning center of the first carriage may change. In such case, the attitude for the tram is determined by both the steering angle $delta_1$ of the front axle of the first carriage and the first

angle $delta_{V1g1}$ at the articulation point G1. Thereby, the input for the steering angle of the rear axle of the first carriage may be calculated based on formula (3). The input for the steering angle of the rear axle of the first carriage is inputted to a steering operation mechanism of the rear axle of the first carriage, thereby controlling to steer the rear axle of the first carriage.

In the embodiment, the step S5 specifically includes steps S5.1 to S5.4.

In step S5.1, the second angle is calculated based on formula (4).

$$delta_{V2g1} = delta_{V1g1} - beta_1 \quad\cdots\cdots\cdots\cdots\cdots\cdots\cdots\cdots\cdots\cdots\cdots \quad (4)$$

In formula (4), $delta_{V2g1}$ represents the second angle for the current carriage, $beta_1$ represents the articulation angle, and $delta_{V1g1}$ represents the first angle for the previous carriage.

In step S5.2, the first angle for the current carriage is determined based on the second angle for the current carriage, as shown in formula (5).

$$delta_{V2g2} = -delta_{V2g1} \quad\cdots\cdots\cdots\cdots\cdots\cdots\cdots\cdots \quad (5)$$

In formula (5), $delta_{V2g2}$ represents the first angle for the current carriage, and $delta_{V2g1}$ represents the second angle for the current carriage;

In step S5.3, the input for the steering angle of the rear axle of the current carriage is calculated based on the second angle and the first angle for the current carriage, as shown in formula (6).

$$delta_{4r} = \arctan\left( \frac{L_{g2} \times \tan\left(delta_{V2g1}\right) + \left(L_2 + L_{2g}\right) \times \tan\left(delta_{V2g2}\right)}{L_{g2} + L_2 + L_{2g}} \right) \quad\cdots\cdots\cdots\cdots \quad (6)$$

In formula (6), $delta_{4r}$ represents the input for the steering angle of the rear axle of the current carriage, $L_{g2}$ represents a pre-acquired distance between the rear axle of the current carriage and an articulation point connecting the current carriage and the following carriage, $L_{2g}$ represents a pre-acquired distance between the front axle of the current carriage and the articulation point connecting the current carriage and the previous carriage, $L_2$ represents a pre-acquired distance between the front axle and the rear axle of the current carriage, $delta_{V2g2}$ represents the first angle for the current carriage, and $delta_{V2g1}$ represents the second angle.

In step S5.4, the input for the steering angle of the front axle of the current carriage is calculated based on formula (7).

$$delta_{3r} = \arctan\left( \frac{L_{2g} \times \tan\left(delta_{4r}\right) + L_2 \times \tan\left(delta_{V2g1}\right)}{L_2 + L_{2g}} \right) \quad\cdots\cdots\cdots\cdots \quad (7)$$

In formula (7), $delta_{3r}$ represents the input for the steering angle of the front axle of the current carriage, $delta_{4r}$ represents the input for the steering angle of the rear axle of the current carriage, $L_{2g}$ represents the pre-acquired distance between the front axle of the current carriage and the articulation point connecting the current carriage and the previous carriage, $L_2$ represents the pre-acquired distance between the front axle and the rear axle of the current carriage, and $delta_{V2g1}$ represents the second angle.

As shown in Figure 7, the second carriage is the current carriage, the first carriage is the previous carriage, and the third carriage is the following carriage. G1 is the articulation point connecting the first carriage and the second carriage, O1 is a center of a turning circle of the first carriage, G2 is the articulation point connecting the second carriage and the third carriage, and O2 is a center of a turning circle of first carriage. An angle between the center axis of the first carriage and a movement direction of the articulation point G1 is a first angle $delta_{V1g1}$ of the previous carriage, an angle between the center axis of the second carriage and the moving direction of the articulation point G1 is a second angle $delta_{V2g1}$, an angle between the center axis of the second carriage and a movement direction of the articulation point G2 is the first angle $delta_{V2g2}$ of the current carriage, and the articulation angle of the articulation mechanism at the articulation point G1 is $beta_1$, which is measured by the angle sensor of the articulation mechanism. The steering angle of the front axis of the first carriage is $delta_1$, the steering angle of the rear axis of the first carriage is $delta_2$, the steering angle of the front axis of the second carriage is $delta_3$, and the steering angle of the rear axis of the second carriage is $delta_4$. In a case that the second carriage is a tail carriage, there is no subsequent articulated carriage and therefore the articulation point G2 does not exist. In such case, a virtual articulation point G2 may be set up. Thereby, a relationship between the second angle $delta_{V2g1}$, the articulation angle $beta_1$ and the first angle $delta_{V1g1}$ is determined as shown in the formula (4). In order to ensure that the articulation point G2 and the articulation point G1 run on a same trajectory, the first angle $delta_{V2g2}$ and the second angle $delta_{V2g1}$ are equal in magnitude and opposite in direction, as shown in formula (5). Similarly, such calculation of the first angle for the current carriage $delta_{V2g2}$ is performed in case of steady-state circumference, and the tram does not run with a constant radius in practice. Therefore, it is required to consider a transition process between different radiuses and perform a delay with inertia link of one or more orders on the first angle $delta_{V2g2}$, as shown in formula (11).

$$delta_{V2g2} = f\left(delta_{V2g2}\right) \quad \ldots\ldots\ldots\ldots (11)$$

In formula (11), $f(delta_{V2g2})$ is a delay operation with inertia link.

As shown in Figure 7, the rear axle of the current carriage, the articulation point G1 and the articulation point G2 are located on one circle with center O2. In a triangle O1-G1-G2, the input $delta_{4r}$ for the steering angle of the rear axle of the current carriage may be calculated based on formula (6). The input $delta_{4r}$ for the steering angle of the rear axle of the second carriage is inputted to a steering operation mechanism of the rear axle of the second carriage, thereby controlling to steer the rear axle of the second carriage.

As shown in Figure 8, the rear axle of the current carriage and the articulation point G1 are on a straight line, therefore an attitude for the current carriage (the second carriage) is determined. Hence, the steering angle for the front axle of the current carriage is an optimal angle required for adapting to the attitude for the current carriage, and can be calculated based on formula (7).

Similarly, for the third carriage or more carriages included in the tram, the steering angles for the front axle and the rear axle of a subsequent carriage may be controlled based on the control of the second carriage in the embodiment. As for the tail carriage, there is no subsequent articulated carriage, and a virtual articulation point may be set. An angle between the central axis of the current carriage and the movement direction of the virtual articulation point may be taken as the first angle $delta_{V2g2}$ of the current carriage, so as to calculate the steering angle of the current carriage and control steering of the current carriage.

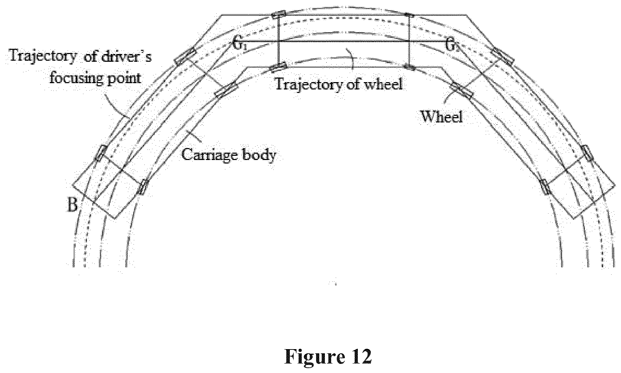

The algorithm of the present disclosure is succinct, which is feasible to implement without additional equipment and with a low cost. It is ensured that the articulation point of the tram and the position on which the driver focuses travel on the same trajectory, all the wheels travel on the same trajectory, the trajectory is well controlled when the tram turns, and pedestrians and other vehicles can be effectively prevented from being endangered due to turning of the tram. A schematic diagram of a tram trajectory controlled according to the embodiment is as shown in Figure 12. B is the driver's focusing point, and G1 and G2 are articulation points. With the control method according to the present disclosure, it is ensured that the focusing point B, the articulation point G1 and the articulation point G2 travel on the same trajectory.

As shown in Figure 9, a system for controlling trajectory-tracking of a tram according to the embodiment includes: a parameter acquisition module, a calculation module and a control module. The parameter acquisition module is configured to acquire a measurement of a steering angle of a front axle of the first carriage of a tram, a measurement of a steering angle of a rear axle of the first carriage of the tram, and an articulation angle of an articulation point connecting a current carriage and a previous carriage. The calculation module is configured to: calculate a first angle for the first carriage, based on the measurement of the steering angle of the front axle of the first carriage and the measurement of the steering angle of the rear axle of the first carriage; calculate an input for the steering angle of the rear axle of the first carriage, based on the first angle and the measurement of the steering angle of the front axle of the first carriage; calculate a second angle and a first angle for the current carriage, based on the articulation angle and a first angle for the previous carriage; and calculate an input for a steering angle of a rear axle of the current carriage and an input for a steering angle of a front axle of the current carriage, based on the second angle and the first angle for the current carriage. The first angle is an angle between an axis of the current carriage and a movement direction of an articulation point connecting the current carriage and a following carriage. The second angle is an angle between the axis of the current carriage and a movement direction of the articulation point connecting the current carriage and the previous carriage. The control module is configured to: control to steer the rear axle of the first carriage, based on the input for the steering angle of the rear axle of the first carriage; control to steer the rear axle of the current carriage, based on the input for the steering angle of the rear axle of the current carriage; and control to steer the front axle of the current carriage, based on the input for the steering angle of the front axle of the current carriage. The calculation module is further configured to perform a delay with inertial link of one or more orders on the first angle.

As shown in Figure 10, a tram is provided according to the embodiment, including the aforementioned system for controlling trajectory-tracking of the tram. A wheelbase of each carriage is same. A distance between a connection point of an articulation structure of each carriage and an axle nearest to the connection point is same. A distance between a far end of each of a head carriage and a tail carriage and an axel nearest to the far end is equal to the distance between an articulation structure and an axle nearest to the articulation structure. As shown in Figure 10, two end carriages are same, a wheelbase of each end carriage is $L_1$, a distance between an articulation point and a rear axle in each end carriage is $L_{g1}$, a distance between a far end (a head position) and a nearest axle in each end carriage is $L_{1g}$, a wheelbase of a middle carriage is $L_2$, a distance between a front articulation point of the middle carriage and the front axle is $L_{2g}$, and a distance between a rear articulation point of the middle carriage and the rear axle is $L_{g2}$. There are $L_1 = L_2$ and $L_{1g} = L_{g1} = L_{2g} = L_{g2}$.

The foregoing embodiments are only preferred embodiments of the present disclosure, and do not limit the present disclosure in any form. The preferred embodiments according to the disclosure are disclosed above, and are not intended to limit the present disclosure. All simple modifications, equivalent variations and improvements made based on the technical content of the present disclosure without departing the content of the technical solutions of the present disclosure fall within the protection scope of the technical solutions of the present disclosure, as defined in the appended claims.

**Claims**

1. A method for controlling trajectory-tracking of a tram, comprising:

   step S1, acquiring a measurement of a steering angle ($delta_{1m}$) of a front axle of the first carriage of the tram and a measurement of a steering angle ($delta_{2m}$) of a rear axle of the first carriage of the tram;
   step S2, calculating, for the first carriage, a first angle ($delta_{V1G0}$, $delta_{V1G1}$) for the first carriage, based on the measurement of the steering angle ($delta_{1m}$) of the front axle of the first carriage and the measurement of the steering angle ($delta_{2m}$) of the rear axle of the first carriage, the method being **characterised by**:

   calculating an input ($delta_{2r}$) for the steering angle of the rear axle of the first carriage, based on the first angle ($delta_{V1G0}$, $delta_{V1G1}$) and the measurement of the steering angle ($delta_{1m}$) of the front axle of the first carriage,
   wherein the first angle ($delta_{V1G0}$, $delta_{V1G1}$) is an angle between an axis of the current carriage and a movement direction of an articulation point (G1) connecting the current carriage and a following carriage;

   step S3, controlling to steer the rear axle of the first carriage, based on the input ($delta_{2r}$) for the steering angle of the rear axle of the first carriage;
   step S4, acquiring, for a next carriage, an articulation angle ($\beta_1$) of an articulation point (G1) connecting the current carriage and a previous carriage;
   step S5, calculating a second angle ($delta_{V2G1}$) and a first angle ($delta_{V2G2}$) for the current carriage, based on the articulation angle ($\beta_1$) and a first angle ($delta_{V1G1}$) for the previous carriage, and

   calculating an input ($delta_{4r}$) for a steering angle of a rear axle of the current carriage and an input ($delta_{3r}$) for a steering angle of a front axle of the current carriage, based on the second angle ($delta_{V2G1}$) and the first angle ($delta_{V2G2}$) for the current carriage,
   wherein the second angle ($delta_{V2G1}$) is an angle between the axis of the current carriage and a movement direction of the articulation point (G1) connecting the current carriage and the previous carriage;

   step S6, controlling to steer the rear axle of the current carriage, based on the input ($delta_{4r}$) for the steering angle of the rear axle of the current carriage, and
   controlling to steer the front axle of the current carriage, based on the input ($delta_{3r}$) for the steering angle of the front axle of the current carriage; and
   step S7, repeating the steps S4 to S6, until the rear axle and the front axle are controlled to be steered for each carriage.

2. The method for controlling trajectory-tracking of the tram according to claim 1, wherein in the step S1, the measurement of the steering angle of the front axle of the first carriage is a steering value from a steering instruction for the front axle of the first carriage, and the measurement of the steering angle of the rear axle of the first carriage is acquired through an angle sensor.

3.  The method for controlling trajectory-tracking of the tram according to claim 2, wherein the step S2 comprises:

    step S2.1, constructing a virtual point in front of the front axle of the first carriage, wherein the virtual point is located on a central axis of the tram;
    step S2.2, calculating a steering angle of the virtual point based on formula:

    $$delta_{V1g0} = \arctan\left( \frac{L_1 + L_{1g}}{L_1} \times \tan\left(delta_{1m}\right) - \frac{L_{1g}}{L_1} \tan\left(delta_{2m}\right) \right)$$

    wherein $delta_{V1g0}$ represents the steering angle of the virtual point, $L_1$ represents a pre-acquired wheelbase between the front axle and the rear axle of the first carriage, $L_{1g}$ represents a pre-acquired distance between the virtual point and the front axle of the first carriage, $delta_{1m}$ represents the measurement of the steering angle of the front axle of the first carriage, and $delta_{2m}$ represents the measurement of the steering angle of the rear axle of the first carriage;
    step S2.3, determining the first angle based on the steering angle of the virtual point, by using formula:

    $$delta_{V1g1} = -delta_{V1g0}$$

    wherein $delta_{V1g0}$ represents the steering angle of the virtual point, and $delta_{V1g1}$ represents the first angle; and
    step S2.4, calculating the input for the steering angle of the rear axle of the first carriage, based on the first angle and the measurement of the steering angle of the front axle of the first carriage, by using formula:

    $$delta_{2r} = \arctan\left( \frac{L_1 \times \tan\left(delta_{V1g1}\right) + L_{g1} \times \tan\left(delta_1\right)}{L_1 + L_{g1}} \right)$$

    wherein $delta_{2r}$ represents the input for the steering angle of the rear axle of the first carriage, $L_1$ represents the pre-acquired wheelbase between the front axle and the rear axle of the first carriage, $L_{g1}$ represents a pre-acquired distance between the rear axle of the first carriage and an articulation point connecting the first carriage and the second carriage, $delta_{V1g1}$ represents the first angle, and $delta_1$ represents the measurement of the steering angle of the front axle of the first carriage.

4.  The method for controlling trajectory-tracking of the tram according to claim 3, wherein after the step S2.3, the method further comprises:
    step S2.3.1, performing, on the first angle, a delay with inertial link of one or more orders.

5.  The method for controlling trajectory-tracking of the tram according to claim 4, wherein the step S5 comprises:

    step S5.1, calculating the second angle based on formula:

    $$delta_{V2g1} = delta_{V1g1} - beta_1$$

    wherein $delta_{V2g1}$ represents the second angle for the current carriage, $beta_1$ represents the articulation angle, and $delta_{V1g1}$ represents the first angle for the previous carriage,
    step S5.2, determining the first angle for the current carriage, based on the second angle for the current carriage, by using formula:

    $$delta_{V2g2} = -delta_{V2g1}$$

    wherein $delta_{V2g2}$ represents the first angle for the current carriage, and $delta_{V2g1}$ represents the second angle for the current carriage;
    step S5.3, calculating the input for the steering angle of the rear axle of the current carriage, based on the second angle and the first angle for the current carriage, by using formula:

$$delta_{4_r} = \arctan\left(\frac{L_{g2} \times \tan\left(delta_{V2g1}\right) + \left(L_2 + L_{2g}\right) \times \tan\left(delta_{V2g2}\right)}{L_{g2} + L_2 + L_{2g}}\right),$$

wherein $delta_{4_r}$ represents the input for the steering angle of the rear axle of the current carriage, $L_{g2}$ represents a pre-acquired distance between the rear axle of the current carriage and an articulation point connecting the current carriage and the following carriage, $L_{2g}$ represents a pre-acquired distance between the front axle of the current carriage and the articulation point connecting the current carriage and the previous carriage, $L_2$ represents a pre-acquired distance between the front axle and the rear axle of the current carriage, $delta_{V2g2}$ represents the first angle for the current carriage, and $delta_{V2g1}$ represents the second angle for the current carriage;

step S5.4, calculating the input for the steering angle of the front axle of the current carriage based on formula:

$$delta_{3_r} = \arctan\left(\frac{L_{2g} \times \tan\left(delta_{4_r}\right) + L_2 \times \tan\left(delta_{V2g1}\right)}{L_2 + L_{2g}}\right),$$

wherein $delta_{3_r}$ represents the input for the steering angle of the front axle of the current carriage, $delta_{4_r}$ represents the input for the steering angle of the rear axle of the current carriage, $L_{2g}$ represents the pre-acquired distance between the front axle of the current carriage and the articulation point connecting the current carriage and the previous carriage, $L_2$ represents the pre-acquired distance between the front axle and the rear axle of the current carriage, and $delta_{V2g1}$ represents the second angle.

6. The method for controlling trajectory-tracking of the tram according to claim 5, wherein after the step S5.2, the method further comprises: step S5.2.1, performing, on the first angle for the current carriage, the delay with inertia link of one or more orders.

7. A system for controlling trajectory-tracking of a tram, comprising:

a parameter acquisition module, configured to acquire a measurement of a steering angle ($delta_{1m}$) of a front axle of the first carriage of a tram, a measurement of a steering angle ($delta_{2m}$) of a rear axle of the first carriage of the tram, and an articulation angle ($\beta_1$) of an articulation point (G1) connecting a current carriage and a previous carriage;

a calculation module, configured to:

calculate a first angle ($delta_{V1G0}$) for the current carriage, based on the measurement of the steering angle ($delta_{1m}$) of the front axle of the first carriage and the measurement of the steering angle ($delta_{2m}$) of the rear axle of the first carriage, the system being **characterised by** the calculation module being configured to:
calculate an input ($delta_{2r}$) for the steering angle of the rear axle of the first carriage, based on the first angle ($delta_{V1G0}$) and the measurement of the steering angle ($delta_{1m}$) of the front axle of the first carriage,
calculate a second angle ($delta_{V2G1}$) and a first angle ($delta_{V2G2}$) for the current carriage, based on the articulation angle ($\beta_1$) and a first angle ($delta_{V1G0}$) for the previous carriage, and
calculate an input ($delta_{4r}$) for a steering angle of a rear axle of the current carriage and an input ($delta_{3r}$) for a steering angle of a front axle of the current carriage, based on the second angle ($delta_{V2G1}$) and the first angle ($delta_{V2G2}$) for the current carriage,
wherein the first angle ($delta_{V2G2}$) is an angle between an axis of the current carriage and a movement direction of an articulation point (G1) connecting the current carriage and a following carriage, and the second angle ($delta_{V2G1}$) is an angle between the axis of the current carriage and a movement direction of the articulation point (G1) connecting the current carriage and the previous carriage; and the system being further **characterised by** a control module, configured to:

control to steer the rear axle of the first carriage, based on the input ($delta_{2r}$) for the steering angle of the rear axle of the first carriage,
control to steer the rear axle of the current carriage, based on the input ($delta_{4r}$) for the steering angle of the rear axle of the current carriage, and
control to steer the front axle of the current carriage, based on the input (delta$_{3r}$) for the steering angle of a front axle of the current carriage.

**8.** The system for controlling trajectory-tracking of the tram according to claim 7, wherein the calculation module is further configured to perform, on the first angle, a delay with inertial link with one or more orders.

**9.** A tram, comprising the system for controlling trajectory-tracking of the tram according to claim 7.

**10.** The tram according to claim 9, wherein a wheelbase of each carriage is same, and a distance between an articulation point of an articulation structure of each carriage and an axle nearest to the articulation point is equal to a distance between a far end of an end carriage and an axle nearest to the far end.

**Patentansprüche**

**1.** Verfahren zur Steuerung einer Verfolgung der Bewegungsbahn einer Straßenbahn, wobei das Verfahren Folgendes umfasst:

Schritt S1 des Erfassens einer Messung eines Lenkwinkels (delta$_{1m}$) einer Vorderachse des ersten Wagens der Straßenbahn und einer Messung eines Lenkwinkels (delta$_{2m}$) einer Hinterachse des ersten Wagens der Straßenbahn;
Schritt S2 des Berechnens für den ersten Wagen eines ersten Winkels (delta$_{V1G0}$, delta$_{V1G1}$) für den ersten Wagen auf Grundlage der Messung des Lenkwinkels (delta$_{1m}$) der Vorderachse des ersten Wagens und der Messung des Lenkwinkels (delta$_{2m}$) der Hinterachse des ersten Wagens, wobei das Verfahren **gekennzeichnet ist durch**:

das Berechnen einer Eingabe (delta$_{2r}$) für den Lenkwinkel der Hinterachse des ersten Wagens auf Grundlage des ersten Winkels (delta$_{V1G0}$, delta$_{V1G1}$) und der Messung des Lenkwinkels (delta$_{1m}$) der Vorderachse des ersten Wagens,
wobei der erste Winkel (delta$_{V1G0}$, delta$_{V1G1}$) ein Winkel zwischen einer Achse des aktuellen Wagens und einer Bewegungsrichtung eines Gelenkspunkts (G1) ist, der den aktuellen Wagen mit einem nachfolgenden Wagen verbindet;
Schritt S3 des Steuerns zum Lenken der Hinterachse des ersten Wagens auf Grundlage der Eingabe (delta$_{2r}$) für den Lenkwinkel der Hinterachse des ersten Wagens;
Schritt S4 des Erfassens für einen nächsten Wagen eines Gelenkswinkels ($\beta_1$) eines Gelenkspunkts (G1), der den aktuellen Wagen und einen vorhergehenden Wagen verbindet;
Schritt S5 des Berechnens eines zweiten Winkels (delta$_{V2G1}$) und eines ersten Winkels (delta$_{V2G2}$) für den aktuellen Wagen auf Grundlage des Gelenkswinkels ($\beta_1$) und eines ersten Winkels (delta$_{V1G1}$) für den vorhergehenden Wagen und
des Berechnens einer Eingabe (delta$_{4r}$) für einen Lenkwinkel einer Hinterachse des aktuellen Wagens und einer Eingabe (delta$_{3r}$) für einen Lenkwinkel einer Vorderachse des aktuellen Wagens auf Grundlage des zweiten Winkels (delta$_{V2G1}$) und des ersten Winkels (delta$_{V2G2}$) für den aktuellen Wagen,
wobei der zweite Winkel (delta$_{V2G1}$) ein Winkel zwischen der Achse des aktuellen Wagens und einer Bewegungsrichtung des Gelenkspunkts (G1) ist, der den aktuellen Wagen mit dem vorhergehenden Wagen verbindet;
Schritt S6 des Steuerns zum Lenken der Hinterachse des aktuellen Wagens auf Grundlage der Eingabe (delta$_{4r}$) für den Lenkwinkel der Hinterachse des aktuellen Wagens und
des Steuerns der Vorderachse des aktuellen Wagens auf Grundlage der Eingabe (delta$_{3r}$) für den Lenkwinkel der Vorderachse des aktuellen Wagens; und
Schritt S7 des Wiederholens der Schritte S4 bis S6, bis das Lenken der Hinterachse und der Vorderachse für jeden Wagen gesteuert wird.

**2.** Verfahren zum Steuern der Bahnverfolgung der Straßenbahn nach Anspruch 1, wobei in Schritt S1 die Messung des Lenkwinkels der Vorderachse des ersten Wagens ein Lenkwert von einem Lenkbefehl für die Vorderachse des ersten Wagens ist und die Messung des Lenkwinkels der Hinterachse des ersten Wagens über einen Winkelsensor erfasst wird.

3. Verfahren zum Steuern der Bewegungsbahnverfolgung der Straßenbahn nach Anspruch 2, wobei Schritt S2 Folgendes umfasst:

Schritt S2.1 des Konstruierens eines virtuellen Punkts vor der Vorderachse des ersten Wagens, wobei der virtuelle Punkt auf einer Mittelachse der Straßenbahn liegt;
Schritt S2.2 des Berechnens eines Lenkwinkels des virtuellen Punkts auf Grundlage folgender Formel:

$$delta_{V1_g0} = \arctan\left(\frac{L_1 + L_{1_g}}{L_1} \times \tan\left(delta_{1_m}\right) - \frac{L_{1_g}}{L_1}\tan\left(delta_{2_m}\right)\right)$$

worin $delta_{V1g0}$ für den Lenkwinkel des virtuellen Punkts steht, $L_1$ für einen vorab erfassten Achsstand zwischen der Vorderachse und der Hinterachse des ersten Wagens steht, $L_{1g}$ für einen vorab erfassten Abstand zwischen dem virtuellen Punkt und der Vorderachse des ersten Wagens steht, $delta_{1m}$ für die Messung des Lenkwinkels der Vorderachse des ersten Wagens steht und $delta_{2m}$ für die Messung des Lenkwinkels der Hinterachse des ersten Wagens steht;
Schritt 2.3 des Bestimmens des ersten Winkels auf Grundlage des Lenkwinkels des virtuellen Punkts unter Anwendung folgender Formel:

$$delta_{V1_g1} = -delta_{V1_g0}$$

worin $delta_{V1g0}$ für den Lenkwinkel des virtuellen Punkts steht und $delta_{V1g1}$ für den ersten Winkel steht; und
Schritt 2.4 des Berechnens der Eingabe für den Lenkwinkel der Hinterachse des ersten Wagens auf Grundlage des ersten Winkels und der Messung des Lenkwinkels der Vorderachse des ersten Wagens unter Verwendung folgender Formel:

$$delta_{2_r} = \arctan\left(\frac{L_1 \times \tan\left(delta_{V1_g1}\right) + L_{g1} \times \tan\left(delta_1\right)}{L_1 + L_{g1}}\right)$$

worin $delta_{2r}$ für die Eingabe des Lenkwinkels der Hinterachse des ersten Wagens steht, $L_1$ für einen vorab erfassten Achsstand zwischen der Vorderachse und der Hinterachse des ersten Wagens steht, $L_{g1}$ für einen vorab erfassten Abstand zwischen der Hinterachse des ersten Wagens und einem Gelenkspunkt steht, der den ersten Wagen und den zweiten Wagen verbindet, $delta_{V1g1}$ für den ersten Winkel steht und $delta_1$ für die Messung des Lenkwinkels der Vorderachse des ersten Wagens steht.

4. Verfahren zum Steuern der Bahnverfolgung der Straßenbahn nach Anspruch 3, wobei nach Schritt S2.3 das Verfahren außerdem Folgendes umfasst:
Schritt S2.3.1 des Durchführens einer Verzögerung mit Trägheitsglied erster oder höherer Ordnung in Bezug auf den ersten Winkel.

5. Verfahren zum Steuern der Bewegungsbahnverfolgung der Straßenbahn nach Anspruch 4, wobei Schritt S5 Folgendes umfasst:

Schritt S5.1 des Berechnens des zweiten Winkels auf Grundlage der Formel:

$$delta_{V2_g1} = delta_{V1_g1} - beta_1$$

worin $delta_{V2g1}$ für den zweiten Winkel für den aktuellen Wagen steht, $beta_1$ für den Gelenkswinkel steht und $delta_{V1g1}$ für den ersten Winkel für den vorhergehenden Wagen steht;
Schritt S5.2 des Bestimmens des ersten Winkels für den aktuellen Wagen auf Grundlage des zweiten Winkels für den aktuellen Wagen unter Verwendung folgender Formel:

$$delta_{V2g2} = -delta_{V2g1}$$

worin $delta_{V2g2}$ für den ersten Winkel für den aktuellen Wagen steht und $delta_{V2g1}$ für den zweiten Winkel für den aktuellen Wagen steht;

Schritt S5.3 des Berechnens der Eingabe für den Lenkwinkel der Hinterachse des aktuellen Wagens auf Grundlage des zweiten Winkels und des ersten Winkels für den aktuellen Wagen unter Verwendung folgender Formel:

$$delta_{4r} = \arctan\left( \frac{L_{g2} \times \tan\left(delta_{V2g1}\right) + \left(L_2 + L_{2g}\right) \times \tan\left(delta_{V2g2}\right)}{L_{g2} + L_2 + L_{2g}} \right)$$

worin $delta_{4r}$ für die Eingabe für den Lenkwinkel der Hinterachse des aktuellen Wagens steht, $L_{g2}$ für einen vorab erfassten Abstand zwischen der Hinterachse des aktuellen Wagens und einem Gelenkspunkt steht, der den aktuellen Wagen und den nachfolgenden Wagen verbindet, $L_{2g}$ für einen vorab erfassten Abstand zwischen der Vorderachse des aktuellen Wagens und dem Gelenkspunkt steht, der den aktuellen Wagen mit dem vorhergehenden Wagen verbindet, $L_2$ für einen vorab erfassten Abstand zwischen der Vorderachse und der Hinterachse des aktuellen Wagens steht, $delta_{V2g2}$ für den ersten Winkel für den aktuellen Wagen steht und $delta_{V2g1}$ für den zweiten Winkel für den aktuellen Wagen steht;

Schritt S5.4 des Berechnens der Eingabe für den Lenkwinkel der Vorderachse des aktuellen Wagens auf Grundlage folgender Formel:

$$delta_{3r} = \arctan\left( \frac{L_{2g} \times \tan\left(delta_{4r}\right) + L_2 \times \tan\left(delta_{V2g1}\right)}{L_2 + L_{2g}} \right)$$

worin $delta_{3r}$ für die Eingabe für den Lenkwinkel der Vorderachse des aktuellen Wagens steht, $delta_{4r}$ für die Eingabe für den Lenkwinkel der Hinterachse des aktuellen Wagens steht, $L_{2g}$ für den vorab erfassten Abstand zwischen der Vorderachse des aktuellen Wagens und dem Gelenkspunkt steht, der den aktuellen Wagen und den vorhergehenden Wagen verbindet, $L_2$ für den vorab erfassten Abstand zwischen der Vorderachse und der Hinterachse des aktuellen Wagens steht und $delta_{V2g1}$ für den zweiten Winkel steht.

6. Verfahren zum Steuern der Bewegungsbahnverfolgung der Straßenbahn nach Anspruch 5, wobei nach dem Schritt 5.2 das Verfahren außerdem Folgendes umfasst: Schritt S5.2.1 des Durchführens der Verzögerung mit Trägheitsglied erster oder höherer Ordnung in Bezug auf den ersten Winkel für den aktuellen Wagen.

7. System zum Steuern der Bewegungsbahnverfolgung einer Straßenbahn, wobei das System Folgendes umfasst:

ein Parametererfassungsmodul, das ausgelegt ist, um eine Messung eines Lenkwinkels ($delta_{1m}$) einer Vorderachse des ersten Wagens einer Straßenbahn, eine Messung eines Lenkwinkels ($delta_{2m}$) einer Hinterachse des ersten Wagens der Straßenbahn und einen Gelenkswinkel ($\beta_1$) eines Gelenkspunkts (G1) zu erfassen, der einen aktuellen Wagen und einen vorhergehenden Wagen verbindet;

ein Berechnungsmodul, das ausgelegt ist, um:

einen ersten Winkel ($delta_{V1G0}$) für den aktuellen Wagen auf Grundlage der Messung des Lenkwinkels ($delta_{1m}$) der Vorderachse des ersten Wagens und der Messung des Lenkwinkels ($delta_{2m}$) der Hinterachse des ersten Wagens zu berechnen, wobei das System **dadurch gekennzeichnet ist, dass** das Berechnungsmodul ausgelegt ist, um:

eine Eingabe ($delta_{2r}$) für den Lenkwinkel der Hinterachse des ersten Wagens auf Grundlage des ersten Winkels ($delta_{V1G0}$) und der Messung des Lenkwinkels ($delta_{1m}$) der Vorderachse des ersten Wagens zu berechnen, einen zweiten Winkel ($delta_{V2G1}$) und einen ersten Winkel ($delta_{V2G2}$) für den aktuellen Wagen auf Grundlage des Gelenkswinkels ($\beta_1$) und eines ersten Winkels ($delta_{V1G0}$) für den vorhergehenden Wagen zu berechnen und eine Eingabe ($delta_{4r}$) für einen Lenkwinkel einer Hinterachse des aktuellen Wagens und eine Eingabe ($delta_{3r}$) für einen Lenkwinkel einer Vorderachse des aktuellen Wagens auf Grundlage des zweiten Winkels ($delta_{V2G1}$) und des ersten Winkels ($delta_{V2G2}$) für den aktuellen Wagen zu berechnen, wobei der erste Winkel ($delta_{V2G2}$) ein Winkel zwischen einer Achse des aktuellen Wagens und einer Bewegungsrichtung eines Gelenkspunkts (G1) ist, der den aktuellen Wagen und einen nachfolgenden Wagen verbindet, und der zweite Winkel (delta$_{V2G1}$) ein Winkel zwischen der Achse des aktuellen Wagens und einer Bewegungsrichtung des Gelenkspunkts (G1) ist, der den aktuellen Wagen und den vorhergehenden Wagen verbindet; und

wobei das System ferner durch ein Steuermodul gekennzeichnet ist, das ausgelegt ist, um:

das Lenken der Hinterachse des ersten Wagens auf Grundlage der Eingabe (delta$_{2r}$) für den Lenkwinkel der Hinterachse des ersten Wagens zu steuern,

das Lenken der Hinterachse des aktuellen Wagens auf Grundlage der Eingabe (delta$_{4r}$) für den Lenkwinkel der Hinterachse des aktuellen Wagens zu steuern und

das Lenken der Vorderachse des aktuellen Wagens auf Grundlage der Eingabe (delta$_{3r}$) für den Lenkwinkel einer Vorderachse des aktuellen Wagens zu steuern.

**8.** System zum Steuern der Bewegungsbahnverfolgung der Straßenbahn nach Anspruch 7, wobei das Berechnungsmodul ferner ausgelegt ist, um in Bezug auf den ersten Winkel eine Verzögerung mit Trägheitsglied erster oder höherer Ordnung durchzuführen.

**9.** Straßenbahn, die ein System zum Steuern der Bahnverfolgung der Straßenbahn nach Anspruch 7 umfasst.

**10.** Straßenbahn nach Anspruch 9, wobei ein Achsstand jedes Wagens gleich ist und ein Abstand zwischen einem Gelenkspunkt einer Gelenksstruktur jedes Wagens und einer Achse am nächsten zum Gelenkspunkt gleich einem Abstand zwischen einem entfernten Ende eines Endwagens und einer Achse am nächsten zum entfernten Ende ist.


**Revendications**

**1.** Procédé de commande de suivi de trajectoire d'un tramway, comprenant les étapes ci-dessous consistant à :

étape S1, acquérir une mesure d'un angle de braquage (delta$_{1m}$) d'un essieu avant du premier wagon du tramway et une mesure d'un angle de braquage (delta$_{2m}$) d'un essieu arrière du premier wagon du tramway ;

étape S2, calculer, pour le premier wagon, un premier angle (delta$_{V1G0}$, delta$_{V1G1}$) pour le premier wagon, sur la base de la mesure de l'angle de braquage (delta$_{1m}$) de l'essieu avant du premier wagon et de la mesure de l'angle de braquage (delta$_{2m}$) de l'essieu arrière du premier wagon, le procédé étant **caractérisé par** l'étape ci-dessous consistant à :

calculer une entrée (delta$_{2r}$) pour l'angle de braquage de l'essieu arrière du premier wagon, sur la base du premier angle (delta$_{V1G0}$, delta$_{V1G1}$) et de la mesure de l'angle de braquage (delta$_{1m}$) de l'essieu avant du premier wagon ;

dans lequel le premier angle (delta$_{V1G0}$, delta$_{V1G1}$) est un angle entre un axe du wagon en cours et une direction de mouvement d'un point d'articulation (G1) reliant le wagon en cours et un wagon suivant ;

étape S3, commander le braquage de l'essieu arrière du premier wagon, sur la base de l'entrée (delta$_{2r}$) pour l'angle de braquage de l'essieu arrière du premier wagon ;

étape S4, acquérir, pour un wagon suivant, un angle d'articulation ($\beta$1) d'un point d'articulation (G1) reliant le wagon en cours et un wagon précédent ;

étape S5, calculer un second angle (delta$_{V2G1}$) et un premier angle (delta$_{V2G2}$) pour le wagon en cours, sur la base de l'angle d'articulation ($\beta$1) et d'un premier angle (delta$_{V1G1}$) pour le wagon précédent ; et

calculer une entrée (delta$_{4r}$) pour un angle de braquage d'un essieu arrière du wagon en cours et une entrée (delta$_{3r}$) pour un angle de braquage d'un essieu avant du wagon en cours, sur la base du second angle (delta$_{V2G1}$) et du premier angle (delta$_{V2G2}$) pour le wagon en cours ;

dans lequel le second angle (delta$_{V2G1}$) est un angle entre l'axe du wagon en cours et une direction de mouvement du point d'articulation (G1) reliant le wagon en cours et le wagon précédent ;

étape S6, commander le braquage de l'essieu arrière du wagon en cours, sur la base de l'entrée (delta$_{4r}$) pour l'angle de braquage de l'essieu arrière du wagon en cours ; et

commander le braquage de l'essieu avant du wagon en cours, sur la base de l'entrée (delta$_{3r}$) pour l'angle de braquage de l'essieu avant du wagon en cours ; et

étape S7, répéter les étapes S4 à S6, jusqu'à ce que l'essieu arrière et l'essieu avant soient commandés afin d'être braqués pour chaque wagon.

**2.** Procédé de commande de suivi de trajectoire du tramway selon la revendication 1, dans lequel, à l'étape S1, la mesure de l'angle de braquage de l'essieu avant du premier wagon est une valeur de braquage provenant d'une instruction de braquage pour l'essieu avant du premier wagon, et la mesure de l'angle de braquage de l'essieu arrière du premier wagon est acquise par un capteur de position angulaire.

3. Procédé de commande de suivi de trajectoire du tramway selon la revendication 2, dans lequel l'étape S2 comprend les étapes ci-dessous consistant à :

étape S2.1, construire un point virtuel devant l'essieu avant du premier wagon, dans lequel le point virtuel est situé sur un axe central du tramway ;
étape S2.2, calculer un angle de braquage du point virtuel sur la base de la formule ci-dessous :

$$ delta_{V1g0} = \arctan\left( \frac{L_1 + L_{1g}}{L_1} \times \tan\left(delta_{1m}\right) - \frac{L_{1g}}{L_1}\tan\left(delta_{2m}\right) \right) $$

dans laquelle « $delta_{V1g0}$ » représente l'angle de braquage du point virtuel, « $L_1$ » représente un empattement pré-acquis entre l'essieu avant et l'essieu arrière du premier wagon, « $L_{1g}$ » représente une distance pré-acquise entre le point virtuel et l'essieu avant du premier wagon, « $delta_{1m}$ » représente la mesure de l'angle de braquage de l'essieu avant du premier wagon, et « $delta_{2m}$ » représente la mesure de l'angle de braquage de l'essieu arrière du premier wagon ;
étape S2.3, déterminer le premier angle sur la base de l'angle de braquage du point virtuel, en utilisant la formule ci-dessous :

$$ delta_{V1g1} = -delta_{V1g0} $$

dans laquelle « $delta_{V1g0}$ » représente l'angle de braquage du point virtuel, et « $delta_{V1g1}$ » représente le premier angle ; et
étape S2.4, calculer l'entrée pour l'angle de braquage de l'essieu arrière du premier wagon, sur la base du premier angle et de la mesure de l'angle de braquage de l'essieu avant du premier wagon, en utilisant la formule ci-dessous :

$$ delta_{2r} = \arctan\left( \frac{L_1 \times \tan\left(delta_{V1g1}\right) + L_{g1} \times \tan\left(delta_1\right)}{L_1 + L_{g1}} \right) $$

dans laquelle « $delta_{2r}$ » représente l'entrée pour l'angle de braquage de l'essieu arrière du premier wagon, « $L_1$ » représente l'empattement pré-acquis entre l'essieu avant et l'essieu arrière du premier wagon, « $L_{g1}$ » représente une distance pré-acquise entre l'essieu arrière du premier wagon et un point d'articulation reliant le premier wagon et le second wagon, « $delta_{V1g1}$ » représente le premier angle, et « $delta_1$ » représente la mesure de l'angle de braquage de l'essieu avant du premier wagon.

4. Procédé de commande de suivi de trajectoire du tramway selon la revendication 3, dans lequel après l'étape S2.3, le procédé comprend en outre l'étape ci-dessous consistant à :
étape S2.3.1, mettre en œuvre, sur le premier angle, un retard avec une liaison inertielle d'un ou plusieurs ordres.

5. Procédé de commande de suivi de trajectoire du tramway selon la revendication 4, dans lequel l'étape S5 comprend l'étape ci-dessous consistant à :

étape S5.1, calculer le second angle sur la base de la formule ci-dessous :

$$ delta_{V2g1} = delta_{V1g1} - beta_1 $$

dans laquelle « $delta_{V2g1}$ » représente le second angle pour le wagon en cours, « $beta_1$ » représente l'angle d'articulation, et « $delta_{V1g1}$ » représente le premier angle pour le wagon précédent,
étape S5.2, déterminer le premier angle pour le wagon en cours, sur la base du second angle pour le wagon en cours, en utilisant la formule ci-dessous :

$$delta_{V2g2} = - delta_{V2g1}$$

dans laquelle « $delta_{V2g2}$ » représente le premier angle pour le wagon en cours, et « $delta_{V2g1}$ » représente le second angle pour le wagon en cours ;

étape S5.3, calculer l'entrée pour l'angle de braquage de l'essieu arrière du wagon en cours, sur la base du second angle et du premier angle pour le wagon en cours, en utilisant la formule ci-dessous :

$$delta_{4_r} = \arctan\left(\frac{L_{g2} \times \tan\left(delta_{v2g1}\right) + \left(L_2 + L_{2g}\right) \times \tan\left(delta_{v2g2}\right)}{L_{g2} + L_2 + L_{2g}}\right)$$

dans laquelle « $delta_{4r}$ » représente l'entrée pour l'angle de braquage de l'essieu arrière du wagon en cours, « $L_{g2}$ » représente une distance pré-acquise entre l'essieu arrière du wagon en cours et un point d'articulation reliant le wagon en cours et le wagon suivant, « $L_{2g}$ » représente une distance pré-acquise entre l'essieu avant du wagon en cours et le point d'articulation reliant le wagon en cours et le wagon précédent, « $L_2$ » représente une distance pré-acquise entre l'essieu avant et l'essieu arrière du wagon en cours, « $delta_{V2g2}$ » représente le premier angle pour le wagon en cours, et « $delta_{V2g1}$ » représente le second angle pour le wagon en cours ;

étape S5.4, calculer l'entrée pour l'angle de braquage de l'essieu avant du wagon en cours sur la base de la formule ci-dessous :

$$delta_{3_r} = \arctan\left(\frac{L_{2g} \times \tan\left(delta_{4r}\right) + L_2 \times \tan\left(delta_{v2g1}\right)}{L_2 + L_{2g}}\right)$$

dans laquelle « $delta_{3r}$ » représente l'entrée pour l'angle de braquage de l'essieu avant du wagon en cours, « $delta_{4r}$ » représente l'entrée pour l'angle de braquage de l'essieu arrière du wagon en cours, « $L_{2g}$ » représente la distance pré-acquise entre l'essieu avant du wagon en cours et le point d'articulation reliant le wagon en cours et le wagon précédent, « $L_2$ » représente la distance pré-acquise entre l'essieu avant et l'essieu arrière du wagon en cours, et « $delta_{V2g1}$ » représente le second angle.

6. Procédé de commande de suivi de trajectoire du tramway selon la revendication 5, dans lequel, après l'étape S5.2, le procédé comprend en outre l'étape ci-après consistant à : étape S5.2.1, mettre en œuvre, sur le premier angle pour le wagon en cours, le retard avec une liaison inertielle d'un ou plusieurs ordres.

7. Système de commande de suivi de trajectoire d'un tramway, comprenant :

un module d'acquisition de paramètres, configuré de manière à acquérir une mesure d'un angle de braquage ($delta_{1m}$) d'un essieu avant du premier wagon d'un tramway, une mesure d'un angle de braquage ($delta_{2m}$) d'un essieu arrière du premier wagon du tramway, et un angle d'articulation ($\beta 1$) d'un point d'articulation ($G1$) reliant un wagon en cours et un wagon précédent ;

un module de calcul, configuré de manière à :

calculer un premier angle ($delta_{V1G0}$) pour le wagon en cours, sur la base de la mesure de l'angle de braquage ($delta_{1m}$) de l'essieu avant du premier wagon et de la mesure de l'angle de braquage ($delta_{2m}$) de l'essieu arrière du premier wagon, le système étant **caractérisé en ce que** le module de calcul est configuré de manière à :

calculer une entrée ($delta_{2r}$) pour l'angle de braquage de l'essieu arrière du premier wagon, sur la base du premier angle ($delta_{V1G0}$) et de la mesure de l'angle de braquage ($delta_{1m}$) de l'essieu avant du premier wagon ;

calculer un second angle ($delta_{V2G1}$) et un premier angle ($delta_{V2G2}$) pour le wagon en cours, sur la base de l'angle d'articulation ($\beta 1$) et d'un premier angle ($delta_{V1G0}$) pour le wagon précédent ; et

calculer une entrée ($delta_{4r}$) pour un angle de braquage d'un essieu arrière du wagon en cours et une entrée ($delta_{3r}$) pour un angle de braquage d'un essieu avant du wagon en cours, sur la base du second angle (delta$_{V2G1}$) et du premier angle (delta$_{V2G2}$) pour le wagon en cours ;

dans lequel le premier angle (delta$_{V2G2}$) est un angle entre un axe du wagon en cours et une direction de mouvement d'un point d'articulation (G1) reliant le wagon en cours et un wagon suivant, et le second angle (delta$_{V2G1}$) est un angle entre l'axe du wagon en cours et une direction de mouvement du point d'articulation (G1) reliant le wagon en cours et le wagon précédent ; et

le système étant en outre **caractérisé par** un module de commande, configuré de manière à :

commander le braquage de l'essieu arrière du premier wagon, sur la base de l'entrée (delta$_{2r}$) pour l'angle de braquage de l'essieu arrière du premier wagon ;

commander le braquage de l'essieu arrière du wagon en cours, sur la base de l'entrée (delta$_{4r}$) pour l'angle de braquage de l'essieu arrière du wagon en cours ; et

commander le braquage de l'essieu avant du wagon en cours, sur la base de l'entrée (delta$_{3r}$) pour l'angle de braquage d'un essieu avant du wagon en cours.

8. Système de commande de suivi de trajectoire du tramway selon la revendication 7, dans lequel le module de calcul est en outre configuré de manière à mettre en œuvre, sur le premier angle, un retard avec une liaison inertielle d'un ou plusieurs ordres.

9. Tramway, comprenant le système de commande de suivi de trajectoire du tramway selon la revendication 7.

10. Tramway selon la revendication 9, dans lequel un empattement de chaque wagon est identique, et une distance entre un point d'articulation d'une structure d'articulation de chaque wagon et un essieu le plus proche du point d'articulation est égale à une distance entre une extrémité éloignée d'un wagon d'extrémité et un essieu le plus proche de l'extrémité éloignée.

Figure 1

Figure 2

Figure 3

# Figure 4

# Figure 5

# Figure 6

# Figure 7

Figure 8

Figure 9

Parameter acquisition module → Calculation module → Control module

Figure 10

End carriage | Middle carriage | End carriage

$L_{1g}$   $L_1$   $L_{g1}$   $L_{2g}$   $L_2$   $L_{g2}$

Acquire a measurement of a steering angle of a front axle of the first carriage of a tram and a measurement of a steering angle of a rear axle of the first carriage of the tram

↓

Calculate, for the first carriage, a first angle for the first carriage, based on the measurement of the steering angle of the front axle of the first carriage and the measurement of the steering angle of the rear axle of the first carriage; and calculate an input for the steering angle of the rear axle of the first carriage, based on the first angle and the measurement of the steering angle of the front axle of the first carriage, where the first angle is an angle between an axis of the current carriage and a movement direction of an articulation point connecting the current carriage and a following carriage

↓

Control to steer the rear axle of the first carriage, based on the input for the steering angle of the rear axle of the first carriage

↓

Acquire, for a next carriage, an articulation angle of an articulation point connecting the current carriage and a previous carriage

↓

Calculate a second angle and a first angle for the current carriage, based on the articulation angle and a first angle for the previous carriage; and calculating an input for a steering angle of a rear axle of the current carriage and an input for a steering angle of a front axle of the current carriage, based on the second angle and the first angle for the current carriage, where the second angle is an angle between the axis of the current carriage and a movement direction of an articulation point connecting the current carriage and a previous carriage

↓

Control to steer the rear axle of the current carriage, based on the input for the steering angle of the rear axle of the current carriage; and control to steer the front axle of the current carriage, based on the input for the steering angle of the front axle of the current carriage

↓

Yes ← ⟨ Whether there is a subsequent carriage ⟩

↓ No

Complete steering control

**Figure 11**

**Figure 12**

**EP 3 530 553 B1**

**Patent documents cited in the description**

- CN 105292257 A